# EUROPEAN PATENT SPECIFICATION

(11) **EP 3 951 136 B1**
(45) Date of publication and mention of the grant of the patent: **11.09.2024**
(21) Application number: 21188094.3
(22) Date of filing: 27.07.2021
(51) Int. Cl.: F01D 5/00

(54) **METHOD FOR REPAIRING COMPOSITE TURBOMACHINE COMPONENTS USING FILLER MATERIAL**
VERFAHREN ZUR REPARATUR VON VERBUNDBAUTEILEN EINER TURBOMASCHINE MITTELS FÜLLMATERIAL
PROCÉDÉ DE RÉPARATION DE COMPOSANTS COMPOSITES DE TURBOMACHINE À L'AIDE D'UN MATÉRIAU DE REMPLISSAGE

(30) Priority: 05.08.2020 US 202016985365
(43) Date of publication of application: 09.02.2022
(73) Proprietor: General Electric Company, Schenectady, NY 12345 (US)
(72) Inventor: ROBERTS, Herbert, Cincinnati, 45215 (US); SCOTT, Christopher, Cincinnati, 45215 (US)
(74) Representative: Openshaw & Co.

(56) References cited:
- US-A1- 2003 196 305
- US-A1- 2015 275 671
- US-A1- 2019 375 689
- US-B1- 10 150 188

## Description

### FIELD

The present invention generally pertains to methods for repairing composite components, such as turbomachine components, and, more specifically, to methods for repairing composite components using filler material.

### BACKGROUND

In recent years, the use of non-traditional high temperature materials, such as ceramic matrix composite (CMC) materials, in gas turbine engines has grown dramatically. Specifically, there is strong interest in replacing metal alloy components within the combustion and turbine sections of a gas turbine engine with CMC components. CMC materials can withstand higher operating temperatures than metal alloys. Higher operating temperatures, in turn, increase the efficiency of the gas turbine engine. Moreover, CMC components require less cooling than metallic components. Additionally, CMC materials are lighter than metallic components and may reduce the structural demands on the engine.

However, gas turbine components formed from CMC materials can be quite expensive. In this respect, when a CMC gas turbine component becomes worn or damaged, it is desirable to repair, rather than replace, the component. As such, methods of repairing CMC components have been developed. For example, the worn or damaged portion(s) of a CMC component may be removed and replaced with new CMC material. While such methods work well, improvements are needed. US 10150188 B1 and US 2003/196305 A1 relate to a method of repairing a CMC composite article.

Accordingly, an improved method for repairing composite components would be welcomed in the technology.

### BRIEF DESCRIPTION

Aspects and advantages of the invention will be set forth in part in the following description, or may be obvious from the description, or may be learned through practice of the invention.

In one aspect, the present subject matter is directed to a method for repairing a composite turbomachine component as set forth in claim 1.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a schematic cross-sectional view of one embodiment of a gas turbine engine;
FIG. 2 is a side view of one embodiment of a shroud block of a gas turbine engine;
FIG. 3 is a flow diagram of one embodiment of a method for repairing composite components;
FIG. 4 is a perspective view of one embodiment of a composite component, particularly illustrating a repair region of the component prior to repair;
FIG. 5 is perspective view of the composite component shown in FIG. 4, particularly illustrating the repair region of the component after preparation for repair;
FIG. 6 is a perspective view of shown in FIGS. 4 and 5, particularly illustrating repair material placed within the repair region of the component;
FIG. 7 is a cross-sectional view of the composite component taken generally about line 7-7 in FIG. 6, particularly illustrating the features of the component being filled with a filler material;
FIG. 8 is a perspective view of the composite component shown in FIGS. 4-7, particularly illustrating new features formed within the component after infiltration of the component; and
FIG. 9 is a flow diagram of one embodiment of a method for repairing composite turbomachine components.

Repeat use of reference characters in the present specification and drawings is intended to represent the same or analogous features or elements of the present invention.

### DETAILED DESCRIPTION

Reference now will be made in detail to exemplary embodiments of the presently disclosed subject matter, one or more examples of which are illustrated in the drawings. Each example is provided by way of explanation and should not be interpreted as limiting the present disclosure. In fact, it will be apparent to those skilled in the art that various modifications and variations can be made in the present disclosure without departing from the scope or spirit of the present disclosure. For instance, features illustrated or described as part of one embodiment can be used with another embodiment to yield a still further embodiment. Thus, it is intended that the present disclosure covers such modifications and variations as come within the scope of the appended claims.

As used herein, the terms "first", "second", and "third" may be used interchangeably to distinguish one component from another and are not intended to signify location or importance of the individual components.

Furthermore, the terms "upstream" and "downstream" refer to the relative direction with respect to fluid flow in a fluid pathway. For example, "upstream" refers to the direction from which the fluid flows, and "downstream" refers to the direction to which the fluid flows.

Additionally, the terms "low," "high," or their respective comparative degrees (e.g., lower, higher, where applicable) each refer to relative speeds within an engine, unless otherwise specified. For example, a "low-pressure turbine" operates at a pressure generally lower than a "high-pressure turbine." Alternatively, unless otherwise specified, the aforementioned terms may be understood in their superlative degree. For example, a "low-pressure turbine" may refer to the lowest maximum pressure turbine within a turbine section, and a "high-pressure turbine" may refer to the highest maximum pressure turbine within the turbine section.

In general, the present subject matter is directed to a method for repairing composite components. More specifically, when repairing a composite component, worn or damaged material may be removed (e.g., via machining, grinding, etc.) from a repair region of the component. Repair material (e.g., a fiber preform, a fiber tape, and/or the like) is then placed within the prepared repair region in place of the removed material. The repair material is infiltrated (e.g., via melt infiltration) to densify the repaired region of the component, thereby forming new composite material in place of the worn/damaged material. For example, the disclosed method may be used to repair various turbomachine components, such as ceramic matrix composite (CMC) gas turbine engine blades, vanes, shroud blocks, and/or the like.

The disclosed method includes filling one or more features defined by the composite component with a filler material prior to infiltration. More specifically, the composite component defines various features, such as holes, slots, and the like. Furthermore, in certain instances, during repair of the composite component, it may be desired to fill in one or more of the features with new material, effectively eliminating such features from the component. However, when the feature(s) are filled with only infiltrant, the new material present within the feature(s) is highly porous. Such porosity may weaken the component and limit its operating life. In this respect, filling the feature(s) with the filler material (e.g., in a slurry or powder form) before infiltration provides a composite precursor with which the infiltrant can bond. During infiltration, the infiltrant densifies the filler material (as opposed to simply filling the feature(s)), thereby forming new composite material having little to no porosity within the feature(s). As such, the filler material is a precursor to the composite material used to form the composite component, such as silicon or silicon carbide.

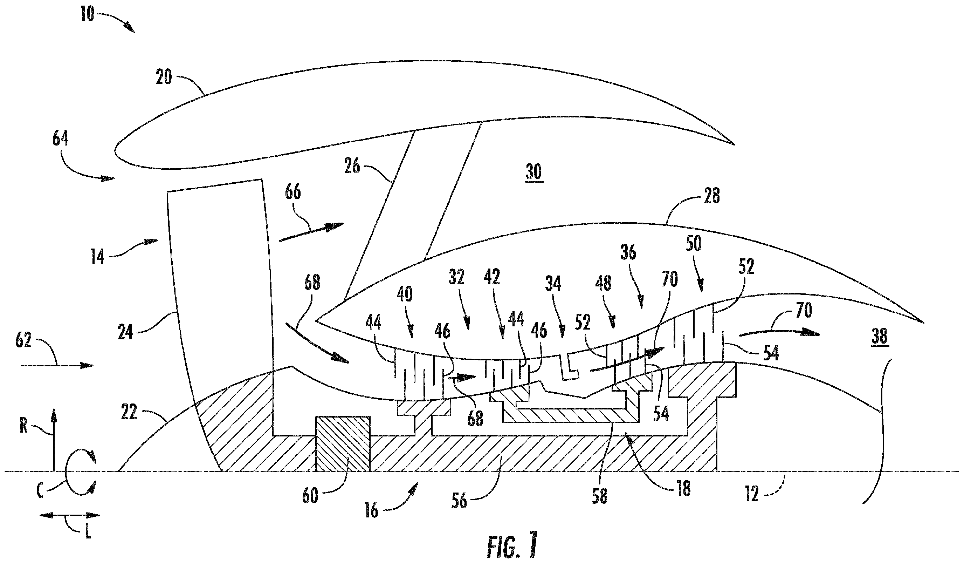

Referring now to the drawings, FIG. 1 is a schematic cross-sectional view of one embodiment of a gas turbine engine 10. In the illustrated embodiment, the engine 10 is configured as a high-bypass turbofan engine. However, in alternative embodiments, the engine 10 may be configured as a propfan engine, a turbojet engine, a turboprop engine, a turboshaft gas turbine engine, or any other suitable type of gas turbine engine.

As shown in FIG. 1, the engine 10 defines a longitudinal direction L, a radial direction R, and a circumferential direction C. In general, the longitudinal direction L extends parallel to an axial centerline 12 of the engine 10, the radial direction R extends orthogonally outward from the axial centerline 12, and the circumferential direction C extends generally concentrically around the axial centerline 12.

In general, the engine 10 includes a fan 14, a low-pressure (LP) spool 16, and a high pressure (HP) spool 18 at least partially encased by an annular nacelle 20. More specifically, the fan 14 may include a fan rotor 22 and a plurality of fan blades 24 (one is shown) coupled to the fan rotor 22. In this respect, the fan blades 24 are spaced apart from each other along the circumferential direction C and extend outward from the fan rotor 22 along the radial direction R. Moreover, the LP and HP spools 16, 18 are positioned downstream from the fan 14 along the axial centerline 12 (i.e., in the longitudinal direction L). As shown, the LP spool 16 is rotatably coupled to the fan rotor 22, thereby permitting the LP spool 16 to rotate the fan 14. Additionally, a plurality of outlet guide vanes or struts 26 spaced apart from each other in the circumferential direction C extend between an outer casing 28 surrounding the LP and HP spools 16, 18 and the nacelle 20 along the radial direction R. As such, the struts 26 support the nacelle 20 relative to the outer casing 28 such that the outer casing 28 and the nacelle 18 define a bypass airflow passage 30 positioned therebetween.

The outer casing 28 generally surrounds or encases, in serial flow order, a compressor section 32, a combustion section 34, a turbine section 36, and an exhaust section 38. For example, in some embodiments, the compressor section 32 may include a low-pressure (LP) compressor 40 of the LP spool 16 and a high-pressure (HP) compressor 42 of the HP spool 18 positioned downstream from the LP compressor 40 along the axial centerline 12. Each compressor 40, 42 may, in turn, include one or more rows of stator vanes 44 interdigitated with one or more rows of compressor rotor blades 46. Moreover, in some embodiments, the turbine section 36 includes a high-pressure (HP) turbine 48 of the HP spool 18 and a low-pressure (LP) turbine 50 of the LP spool 16 positioned downstream from the HP turbine 48 along the axial centerline 12. Each turbine 48, 50 may, in turn, include one or more rows of stator vanes 52 interdigitated with one or more rows of turbine rotor blades 54.

Additionally, the LP spool 16 includes the low-pressure (LP) shaft 56 and the HP spool 18 includes a high pressure (HP) shaft 58 positioned concentrically around the LP shaft 56. In such embodiments, the HP shaft 58 rotatably couples the rotor blades 54 of the HP turbine 48 and the rotor blades 46 of the HP compressor 42 such that rotation of the HP turbine rotor blades 54 rotatably drives HP compressor rotor blades 46. As shown, the LP shaft 56 is directly coupled to the rotor blades 54 of the LP turbine 50 and the rotor blades 46 of the LP compressor 40. Furthermore, the LP shaft 56 is coupled to the fan 14 via a gearbox 60. In this respect, the rotation of the LP turbine rotor blades 54 rotatably drives the LP compressor rotor blades 46 and the fan blades 24.

In several embodiments, the engine 10 may generate thrust to propel an aircraft. More specifically, during operation, air (indicated by arrow 62) enters an inlet portion 64 of the engine 10. The fan 14 supplies a first portion (indicated by arrow 66) of the air 62 to the bypass airflow passage 30 and a second portion (indicated by arrow 68) of the air 62 to the compressor section 32. The second portion 68 of the air 62 first flows through the LP compressor 40 in which the rotor blades 46 therein progressively compress the second portion 68 of the air 62. Next, the second portion 68 of the air 62 flows through the HP compressor 42 in which the rotor blades 46 therein continue progressively compressing the second portion 68 of the air 62. The compressed second portion 68 of the air 62 is subsequently delivered to the combustion section 34. In the combustion section 34, the second portion 68 of the air 62 mixes with fuel and burns to generate high-temperature and high-pressure combustion gases 70. Thereafter, the combustion gases 70 flow through the HP turbine 48 which the HP turbine rotor blades 54 extract a first portion of kinetic and/or thermal energy therefrom. This energy extraction rotates the HP shaft 58, thereby driving the HP compressor 42. The combustion gases 70 then flow through the LP turbine 50 in which the LP turbine rotor blades 54 extract a second portion of kinetic and/or thermal energy therefrom. This energy extraction rotates the LP shaft 56, thereby driving the LP compressor 40 and the fan 14 via the gearbox 60. The combustion gases 70 then exit the engine 10 through the exhaust section 38.

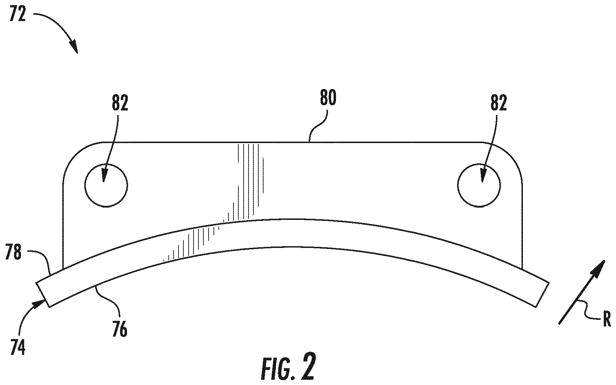

FIG. 2 is a side view of one embodiment of a shroud block 72 of the gas turbine engine 10. In general, several shroud blocks 72 are circumferentially arranged to form a shroud (not shown) enclosing or otherwise surrounding one of the rows of rotor blades 46 in the compressor section 32 or one of the rows of rotor blades 54 in the turbine section 36. As shown, the shroud block 72 includes an annular wall 74 extending between an inner surface 76 and an outer surface 78 in the radial direction R. The inner surface 76 is, in turn, positioned in close proximity to the tips of the corresponding blades 46, 54 to minimize the leakage of the air/combustion gases 68/70 past the blades 46, 54. Furthermore, the shroud 72 includes a pair of mounting rails 80 (one is shown). The rails 80 are spaced apart from each other in the longitudinal direction L and extend outward from the outer surface 78 of the annular wall 74 in the radial direction R. Moreover, each rail 80 defines a pair of mounting holes 82 for coupling the shroud block 72 to the outer casing 28 of the engine 10. However, in alternative embodiments, the shroud block 72 may have any other suitable configuration.

Additionally, one or more the components of the gas turbine engine 10 may be formed of a composite material, such as ceramic matrix composite (CMC) material. For example, in several embodiments, the compressor vanes 44, the compressor blades 46, the turbine vanes 52, the turbine blades 54, and shroud blocks 72 may be formed from CMC materials. However, in alternative embodiments, any other suitable components of the engine 10 may be formed by composite materials.

The configuration of the gas turbine engine 10 described above and shown in FIGS. 1 and 2 is provided only to place the present subject matter in an exemplary field of use. Thus, the present subject matter may be readily adaptable to any manner of gas turbine engine configuration, including other types of aviation-based gas turbine engines, marine-based gas turbine engines, and/or land-based/industrial gas turbine engines.

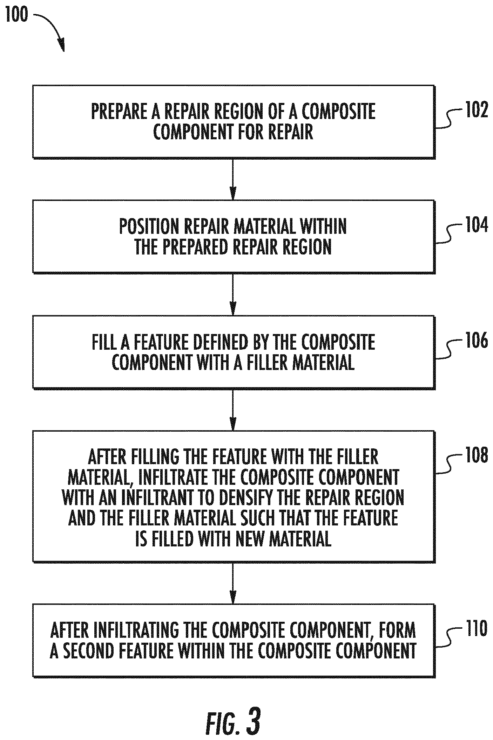

FIG. 3 is a flow diagram of one embodiment of a method 100 for repairing composite components. Although FIG. 3 depicts steps performed in a particular order, the disclosed methods are not limited to any particular order or arrangement. As such, the various steps of the disclosed methods can be omitted, rearranged, combined, and/or adapted in various ways without deviating from the scope of the present disclosure.

In general, the various steps of the method 100 will be described below in the context of repairing a composite component 200. For example, as will be described below, the composite component 200 may correspond to a composite component of the gas turbine engine 10. However, in alternative embodiments, the composite component 200 may correspond to any other suitable composite component.

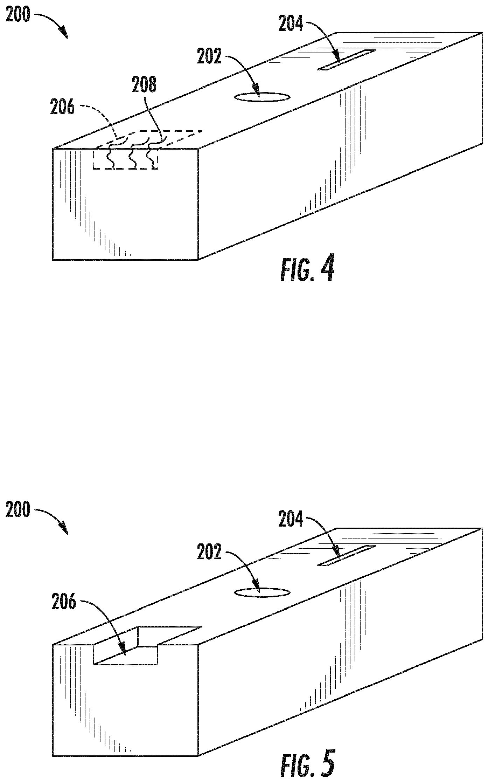

FIG. 4 is a perspective view of one embodiment of the composite component 200. In the general, the component 200 defines various features therein. More specifically, as shown, in the illustrated embodiment, the component 200 defines a hole 202 and a slot 204. For example, in one embodiment, the hole 202 may be a mounting hole (e.g., the hole 82 of the shroud block 72) configured to receive a fastener for use in mounting the component 200. Moreover, in one embodiment, the slot 204 may be configured to receive another component, such as a seal (not shown). As such, the hole 202 and the slot 204 may be blind features (i.e., not a through hole or through slot) that do not extend through the component 200. Thus, the hole 202 and the slot 204 may extend into the component 200 from one surface thereof and terminate before extending through another surface of the component 200. However, in alternative embodiments, the component 200 may define any other suitable type or number of features therein, such as additional holes 202, additional slots 204, a channel(s) (not shown), a passage(s) (not shown), and/or the like.

Furthermore, as shown in FIG. 4, the composite component 200 includes a repair region 206. In general, the repair region 206 corresponds to a portion of the component 200 that will be repaired in accordance with the method 100. More specifically, the repair region 206 may be a worn or damaged portion of the component 200. For example, in the illustrated embodiment, the repair region 206 includes several cracks 208. Although the component 200 shown in FIG. 1 only includes one repair region 206, the component 200 may, in other embodiments, include any other suitable number of repair regions 206.

Moreover, the composite component 200 may be formed from any suitable composite material. For example, the composite material may be selected from the group consisting of, but not limited to, a ceramic matrix composite (CMC), a polymer matrix composite (PMC), a metal matrix composite (MMC), or a combination thereof. Suitable examples of matrix material for a CMC matrix is ceramic powder, including but not limited to, silicon carbide, aluminum-oxide, silicon oxide, and combinations thereof. Suitable examples of matrix material for a PMC include, but are not limited to, epoxy-based matrices, polyester-based matrices, and combinations thereof. Suitable examples of a MMC matrix material include, but are not limited to powder metals such as, but not limited to, aluminum or titanium capable of being melted into a continuous molten liquid metal which can encapsulate fibers present in the assembly, before being cooled into a solid ingot with incased fibers. The resulting MMC is a metal article with increased stiffness, and the metal portion (matrix) is the primary load caring element. For example, in one embodiment, the composite component 200 may be formed from a silicon carbide-silicon carbide (SiC-SiC) matrix composite.

Referring again to FIG. 3, at (102), the method 100 may include preparing a repair region of a composite component for repair. Specifically, in several embodiments, at (102), the worn or damaged material of the repair region 206 (e.g., the portion of the component 200 containing the cracks 208) may be removed from the composite component 200 via machining, grinding, cutting, and/or the like. As shown in FIG. 5, upon completion of (102), the repair region 206 is a void where the worn/damaged material was originally present.

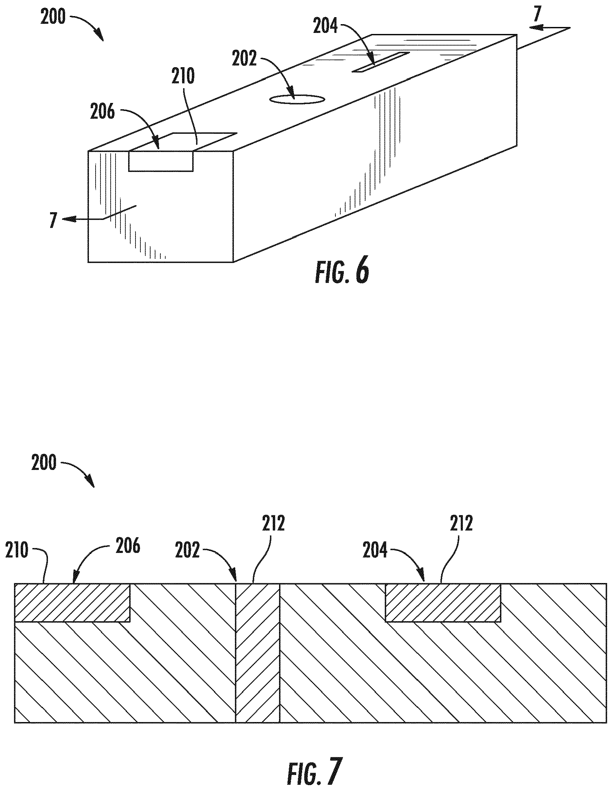

Additionally, as shown in FIG. 3, at (104), the method 100 includes placing a repair material within the prepared repair region. For example, as shown in FIG. 6, repair material 210 may be placed with the void at prepared repair region 206 such that the repair material 210 occupies the space where the worn/damaged material was originally present. As will be described below, the repair material 210 will be infiltrated such that new composite material is formed in the repair region 206, thereby repairing the component 200. In this respect, the repair material 210 corresponds to a precursor material for the composite material from which the component 200 is formed. As such, the repair material 210 may include a plurality of fibers defining voids that receive the infiltrant. For example, in embodiments in which the component 200 is formed from a SiC-SiC matrix composite, the repair material 210 may correspond to a silicon carbide (SiC) fiber preform having the same shape and size as the void left in the repair region. However, in alternative embodiments, the repair material 210 may correspond to any other suitable composite precursor material, such as a fiber preform formed of another suitable material, fiber tapes, fiber mats, and the like.

Furthermore, as shown in FIG. 3, at (106), the method 100 includes filling a feature defined by the composite component with a filler material. For example, as shown in FIG. 7, in the illustrated embodiment, the hole 202 and the slot 204 defined by the component 200 are filled with a filler material 212. In general, the filler material 212 provides a composite precursor with which infiltrant can bond. As such, when the component 200 is infiltrated as will be described below, the infiltrant densifies the filler material (as opposed to simply filling the hole 202 and the slot 204), thereby forming new composite material having little to no porosity within the hole 202 and the slot 204. Thus, at (106), one or more features defined by the composite component 200 are effectively eliminated.

At (106), any suitable features of the composite component 200 may be filled with filler material 212. More specifically, as described above, in certain instances, it may be desired to fill in one or more features of the component 200 with new composite material, thereby eliminating these features. For example, this may be done when it is desired to form a new feature(s) at a different location(s) within the component 200. For example, in the embodiment shown in FIG. 7, every feature defined by the component 200 (i.e., both the hole 202 and the slot 204) is filled with the filler material 212 such that every feature will be filled in with new composite material. However, in other instances, it may be desired to only fill in a portion of the features of the component 200 with new composite material.

The filler material 212 is any suitable precursor to the composite material from which the component 200 is formed. For example, in embodiments in which the composite component 200 is formed from a SiC-SiC matrix composite, the filler material 212 may be silicon carbide. In another embodiment, the composite material 200 may be silicon.

Moreover, the filler material 212 may be in any suitable form. For example, in one embodiment, the filler material 212 may be a slurry. In such an embodiment, the hole 202 and the slot 204 defined by the component 200 are filled with the slurry containing the filler material 212. Furthermore, in another embodiment, the filler material 212 may be a powder. In such an embodiment, the hole 202 and the slot 204 defined by the component 200 are filled with a powder form of the filler material 212.

In addition, as shown in FIG. 3, after filling the feature with the filler material, at (108), the method 100 includes infiltrating the composite component with an infiltrant to densify the repair region and the filler material such that the feature is filled with new material. Specifically, one or more features of the composite component 200 have been filled with the filler material 212 at (106), the composite component 200 is infiltrated with a suitable infiltrant. During infiltration, the infiltrant densifies the repair material 210 present within the repair region 206, thereby forming new composite material within the repair region 206. Additionally, during infiltration, the infiltrant densifies the filler material 212 present within the feature(s) of the component 200, thereby forming new composite material within the feature(s). As such, the feature(s) that have been filled with the filler material 212 are effectively eliminated during infiltration.

In several embodiments, at (108), the method 100 may include melt infiltrating the composite component 200. More specifically, as mentioned above, the component 200 may be formed from a SiC-SiC matrix composite. In such an embodiment, the repair material 210 corresponds to a silicon carbide preform, the filler material 212 corresponds to a silicon carbide slurry or powder, and the infiltrant corresponds to silicon. Thus, at (108), molten silicon may be poured onto the component 200. The molten silicon then infiltrates the repair material 210 and the filler material 212 by capillary pressure. A first portion of the silicon reacts with the carbon within the repair material 210 and the filler material 212. Moreover, a second portion of the carbon fills the voids within the repair material 210 and the filler material 212 (e.g., the voids between the powder particles in the filler material 212), thereby densifying the repair material 210 and the filler material 212. However, in alternative embodiments, any suitable type of infiltration may be used at (108).

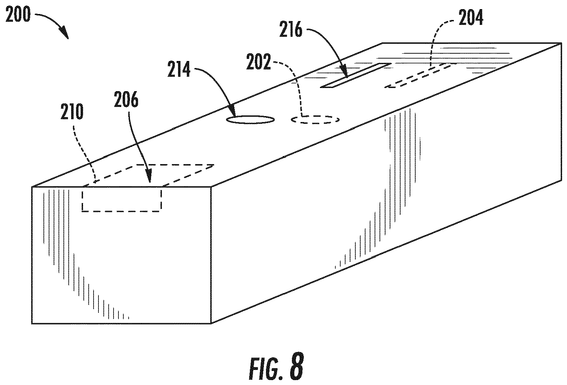

In addition, after infiltrating the composite component, at (110), the method 100 may include forming a second feature within the composite component. More specifically, after the component 200 has been infiltrated at (108), the hole 202 and the slot 204 are filled in with new composite material. Thus, the hole 202 and the slot 204 are effectively eliminated from the component 200. As such, in certain instances, it may be desirable to form new features within the component 200. For example, as shown in FIG. 8, a new hole 214 and a new slot 216 are formed within the component 200. In the illustrated embodiment, the new hole 214 is spaced apart from the location of the hole 202 that has been filled in with new composite material. Furthermore, the new slot 216 is spaced apart from the location of the slot 204 that has been filled in with new composite material. The new hole 214 and the new slot 216 may be formed using any suitable method, such as machining, drilling, and/or the like. However, in alternative embodiments, the new hole 214 and the new slot 216 may be positioned at the same locations as the original hole 202 and the original slot 204, such as when it is desired to make such features smaller.

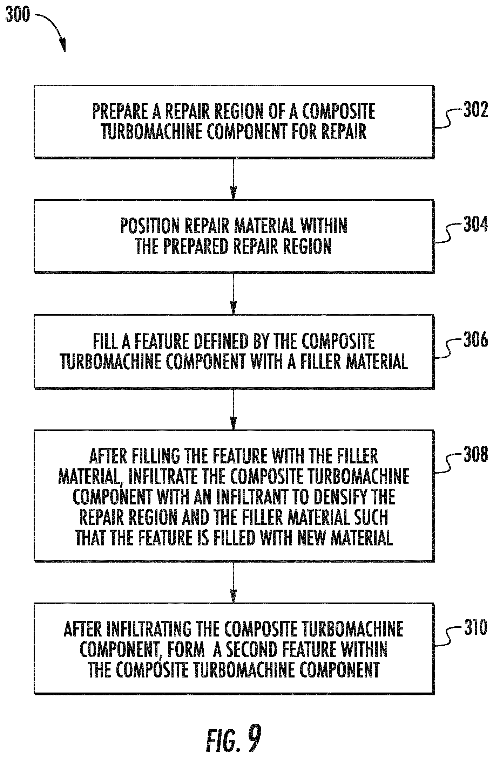

FIG. 9 is a flow diagram of one embodiment of a method 300 for repairing composite turbomachine components. Although FIG. 9 depicts steps performed in a particular order, the disclosed methods are not limited to any particular order or arrangement. As such, the various steps of the disclosed methods can be omitted, rearranged, combined, and/or adapted in various ways without deviating from the scope of the present disclosure.

In several embodiments, the method 300 may be used to repair a composite component(s) of the engine 10. For example, in some embodiments, composite component(s) correspond to a compressor vane(s) 44, a compressor blade(s) 46, a turbine vane(s) 52, a turbine blade(s) 54, and/or a shroud block(s) 72 of the engine 10. However, in alternative embodiments, the composite component(s) may correspond to any suitable component(s), such as other component(s) of a turbomachine or component(s) of any other turbomachine.

As shown in FIG. 9, at (302), the method 300 may include preparing a repair region of a composite turbomachine component for repair. Additionally, at (304), the method 300 includes placing a repair material within the prepared repair region. Furthermore, at (306), the method 300 includes filling a feature defined by the composite turbomachine component with a filler material. Moreover, after filling the feature with the filler material, at (308), the method 300 includes infiltrating the composite turbomachine component with an infiltrant to densify the repair region and the filler material such that the feature is filled with new material. In addition, after infiltrating the composite turbomachine component, at (310), the method 300 may include forming a second feature within the composite turbomachine component.

This written description uses examples to disclose the invention, including the best mode, and also to enable any person skilled in the art to practice the invention, including making and using any devices or systems and performing any incorporated methods. The patentable scope of the invention is defined by the appended claims.

## Claims

1. A method (100) for repairing a composite turbomachine component (200), the method comprising:
positioning repair material (210) within a repair region (206) of the composite component (200) formed of a composite material; **characterised in that** the method further comprises the steps of:
filling a feature defined by the composite component (200) with a filler material (212), the filler material being a precursor to the composite material, wherein the feature defined by the composite component comprises a hole (202) or a slot (204); and
after filling the feature with the filler material (212), infiltrating the composite component (200) with an infiltrant to densify the repair region (206) and the filler material (212) such that the feature is filled with new material.

2. The method of claim 1, wherein the filler material (212) is a powder.

3. The method of claim 1, wherein the filler material (212) is a slurry.

4. The method of any preceding claim, wherein the filler material (212) comprises silicon.

5. The method of any preceding claim, wherein the infiltrant is silicon.

6. The method of any preceding claim, wherein the filler material (212) is silicon carbide.

7. The method of any preceding claim, wherein the feature defined by the composite component (200) corresponds to a first feature, the method further comprising:
after infiltrating the composite component (200), forming a second feature within the composite component (200).

8. The method of claim 7, wherein the second feature is spaced apart from the first feature.

9. The method of any preceding claim, wherein infiltrating the composite component (200) comprises melt infiltrating the composite component (200) with the infiltrant to densify the repair region (206) and the filler material (212).

10. The method of any preceding claim, further comprising:
preparing the repair region for repair before positioning the repair material within the repair region (206).

11. The method of claim 1, wherein the composite turbomachine component comprises a gas turbine engine vane, a gas turbine engine blade, or a gas turbine engine shroud block.

12. The method of any preceding claim, wherein composite material comprises a ceramic matrix composite.

13. The method of any preceding claim, wherein the feature comprises a blind feature.

## Patentansprüche

1. Verfahren (100) zum Reparieren einer Verbundstoffturbomaschinenkomponente (200), das Verfahren umfassend:
Positionieren von Reparaturmaterial (210) innerhalb eines Reparaturbereichs (206) der Verbundstoffkomponente (200), die aus einem Verbundstoffmaterial ausgebildet ist; **dadurch gekennzeichnet, dass** das Verfahren ferner die Schritte umfasst:
Füllen eines Merkmals, das durch die Verbundstoffkomponente (200) definiert ist, mit einem Füllmaterial (212), wobei das Füllmaterial ein Vorläufer des Verbundstoffmaterials ist, wobei das Merkmal, das durch die Verbundstoffkomponente definiert ist, ein Loch (202) oder einen Schlitz (204) umfasst; und
nach dem Füllen des Merkmals mit dem Füllmaterial (212), Infiltrieren der Verbundstoffkomponente (200) mit einem Infiltriermittel, um den Reparaturbereich (206) und das Füllmaterial (212) derart zu verdichten, dass das Merkmal mit neuem Material gefüllt ist.

2. Verfahren nach Anspruch 1, wobei das Füllmaterial (212) ein Pulver ist.

3. Verfahren nach Anspruch 1, wobei das Füllmaterial (212) eine Aufschlämmung ist.

4. Verfahren nach einem der vorstehenden Ansprüche, wobei das Füllmaterial (212) Silizium umfasst.

5. Verfahren nach einem der vorstehenden Ansprüche, wobei das Infiltriermittel Silizium ist.

6. Verfahren nach einem der vorstehenden Ansprüche, wobei das Füllmaterial (212) Siliziumkarbid ist.

7. Verfahren nach einem der vorstehenden Ansprüche, wobei das Merkmal, das durch die Verbundstoffkomponente (200) definiert ist, einem ersten Merkmal entspricht, das Verfahren ferner umfassend:
nach dem Infiltrieren der Verbundstoffkomponente (200), Ausbilden eines zweiten Merkmals innerhalb der Verbundstoffkomponente (200).

8. Verfahren nach Anspruch 7, wobei das zweite Merkmal von dem ersten Merkmal beabstandet ist.

9. Verfahren nach einem der vorstehenden Ansprüche, wobei das Infiltrieren der Verbundstoffkomponente (200) ein Schmelzinfiltrieren der Verbundstoffkomponente (200) mit dem Infiltriermittel umfasst, um den Reparaturbereich (206) und das Füllmaterial (212) zu verdichten.

10. Verfahren nach einem der vorstehenden Ansprüche, ferner umfassend:
Vorbereiten des Reparaturbereichs für die Reparatur vor dem Positionieren des Reparaturmaterials innerhalb des Reparaturbereichs (206).

11. Verfahren nach Anspruch 1, wobei die Verbundstoffturbomaschinenkomponente einen Gasturbinentriebwerkflügel, eine Gasturbinentriebwerkschaufel oder einen Gasturbinentriebwerksabdeckungsblock umfasst.

12. Verfahren nach einem der vorstehenden Ansprüche, wobei das Verbundstoffmaterial einen Keramikmatrixverbundstoff umfasst.

13. Verfahren nach einem der vorstehenden Ansprüche, wobei das Merkmal ein Blindmerkmal umfasst.

## Revendications

1. Procédé (100) destiné à la réparation d'un composant composite de turbomachine (200), le procédé comprenant :
le positionnement du matériau de réparation (210) dans une zone de réparation (206) du composant composite (200) formé d'un matériau composite ; **caractérisé en ce que** le procédé comprend en outre les étapes suivantes :
le remplissage d'une caractéristique définie par le composant composite (200) avec un matériau de remplissage (212), le matériau de remplissage étant un précurseur du matériau composite, dans lequel la caractéristique définie par le composant composite comprend un trou (202) ou une fente (204) ; et
après avoir rempli la caractéristique avec le matériau de remplissage (212), l'infiltration du composant composite (200) avec un infiltrant pour densifier la zone de réparation (206) et le matériau de remplissage (212) de sorte que la caractéristique soit remplie avec un nouveau matériau.

2. Procédé selon la revendication 1, dans lequel le matériau de remplissage (212) est une poudre.

3. Procédé selon la revendication 1, dans lequel le matériau de remplissage (212) est une bouillie.

4. Procédé selon l'une quelconque revendication précédente, dans lequel le matériau de remplissage (212) comprend du silicium.

5. Procédé selon l'une quelconque revendication précédente, dans lequel l'agent d'infiltration est du silicium.

6. Procédé selon l'une quelconque revendication précédente, dans lequel le matériau de remplissage (212) est un carbure de silicium.

7. Procédé selon l'une quelconque revendication précédente, dans lequel la caractéristique définie par le composant composite (200) correspond à une première caractéristique, le procédé comprenant en outre :
après infiltration du composant composite (200), le formage d'une seconde caractéristique dans le composant composite (200).

8. Procédé selon la revendication 7, dans lequel la seconde caractéristique est espacée de la première caractéristique.

9. Procédé selon l'une quelconque revendication précédente, dans lequel l'infiltration du composant composite (200) comprend l'infiltration par fusion du composant composite (200) avec l'infiltrant pour densifier la zone de réparation (206) et le matériau de remplissage (212).

10. Procédé selon l'une quelconque revendication précédente, comprenant en outre :
la préparation de la zone de réparation pour la réparation avant de positionner le matériau de réparation dans la zone de réparation (206).

11. Procédé selon la revendication 1, dans lequel le composant composite de la turbomachine comprend une aube de moteur à turbine à gaz, une pale de moteur à turbine à gaz ou un bloc de carénage de moteur à turbine à gaz.

12. Procédé selon l'une quelconque des revendications précédentes, dans lequel la matériau composite comprend une compose de matrice en céramique.

13. Procédé selon l'une quelconque revendication précédente, dans lequel la caractéristique comprend une caractéristique aveugle.
